# FASCICULE DE BREVET EUROPEEN

(11) **EP 0 953 280 B1**
(45) Date de publication et mention de la délivrance du brevet: **30.07.2003**
(21) Numéro de dépôt: 99460027.8
(22) Date de dépôt: 22.04.1999
(51) Int. Cl.: A01C 7/04

(54) **Procédé et dispositif de semoir de précision par application directe avec lissage**
Einzelkornsävorrichtung und Verfahren mit direktem Aufbringen und Glättung
Method and device for precise sowing by direct application and smoothing

(30) Priorité: 30.04.1998 FR 9805649
(43) Date de publication de la demande: 03.11.1999
(73) Titulaire: Coudrieau, Joel, 44650 Legé (FR); Lanchier, Jean-Marc, 56400 Auray (FR)
(72) Inventeur: Coudrieau, Joel, 44650 Legé (FR); Lanchier, Jean-Marc, 56400 Auray (FR)

(56) Documents cités:
- EP-A- 0 350 634
- WO-A-96/04774
- DE-A- 1 582 087
- FR-A- 2 713 437
- US-A- 4 306 509

## Description

Le procédé et le dispositif pour sa mise en oeuvre qui sont exposés ici concernent le semis de haute précision de toutes graines de plantes sur tous supports (film, feuille de papier, ouate de cellulose, substrat ou pleine terre, par exemple).

En effet, on a constaté que la parfaite disposition géométrique de graines placées très précisément une à une sur leur terrain de germination est un facteur d'augmentation de rendement, de régularité et de qualité, avec en prime une économie de graines et moins de maladies végétales, donc moins de produits chimiques de traitement.

En conséquence, le semis idéal, sur support ou en pleine terre, doit être parfaitement géométrique, selon les règles de l'art pour chaque plante. Il doit être fait au millimètre près et graine à graine, comme si ces dernières avaient été placées une à une à la main, en espacement parfait et régulier par le meilleur des spécialistes.

Pour obtenir ce résultat, un procédé de semis doit respecter plusieurs impératifs et toujours sans abîmer la graine, il doit mettre en oeuvre :
a) des moyens de prendre n'importe quelle forme ou taille de graine
b) des moyens de les séparer une à une
c) des moyens les déposer précisément sans rebond possible sur un support définitif.
Le dispositif pour la mise en oeuvre de ce procédé doit comporter trois éléments distincts :
- un premier module capable de prendre n'importe quelle graine à partir d'un stock en vrac, ici un cylindre aspirant lisse collant les graines à l'embouchure de trous à sa surface, dispositif classique mais ayant des caractéristiques mécaniques typiques nouvelles,
- un deuxième module capable de les séparer pour qu'il n'en reste qu'une seule par emplacement désiré, ici un dispositif de vibreurs générant des vibrations spéciales sur la surface du cylindre semoir et le faisant entrer en entrer en résonance comme une cloche,
- un troisième module capable de les placer délicatement et précisément à l'emplacement voulu sans qu'elles ne ricochent ou ne roulent, ici une application directe contre le support souple avec un minime glissement différentiel entre cylindre et support provoquant un « lissage » des graines après qu'elles aient été enfoncées dans le support.

Le dispositif a donc deux particularités principales :
- D'une part, le cylindre rotatif aspirant est en contact direct avec la surface sur laquelle on veut semer, surface qui défile sous lui avec une légère différence de vitesses provoquant alors un glissement différentiel avec "lissage" des graines, le support étant souple, fin ou fibreux, et porté par un tapis souple de préférence pour que les graines s'enfoncent dans le support sans s'abîmer,
- D'autre part, ledit cylindre est creux avec des caractéristiques de matière et d'épaisseur de parois adéquates pour pouvoir vibrer. Ledit cylindre est de plus monté sur suspension élastique au niveau de ses flasques pour résonner librement comme une cloche avec des vibrations perpendiculaires en chaque point à sa surface. Ces vibrations spéciales sont réglables selon les graines, pour les séparer une à une sur la surface dudit cylindre avant qu'elles soient appliquées sur le support.

A noter que ces deux aspects du procédé et du dispositif (application directe cylindre/support et vibrations du cylindre) sont indissociables, car ils interfèrent entre eux à cause de l'amortissement favorable des vibrations vers le bas du cylindre dû à l'appui sur le support souple.

Par comparaison avec l'état de la technique, de très nombreux semoirs ont été inventés et brevetés pour semer en pleine terre ou sur support.

Pour prendre les graines le plus délicatement possible, ils utilisent habituellement un des deux procédés les plus courants qui sont du domaine public depuis longtemps, le procédé mécanique et le procédé aspirant.
- Le premier procédé général emploie des dispositifs en forme de disques ou de cylindres rotatifs possédant des alvéoles creuses hémisphériques ayant juste la taille de la graine choisie et certains se servent de vibrations pour évacuer les graines excédentaires, par exemple brevet US 4046285 (cité pour mémoire car ces cylindres ne sont pas aspirants, et ne peuvent pas appliquer les graines sur un support par glissement).
- Le deuxième procédé général emploie des dispositifs aspirants pour coller provisoirement les graines sur des orifices aspirants plus petits qu'elles.

Il y a deux classes de dispositifs aspirants :
les semoirs dits "pneumatiques" séquentiels possédant des buses plongeant dans une réserve de graines puis les déposant en un mouvement alternatif. Des vibrations ont été employées pour certains de ces dispositifs (brevets EP 0171207, US 3738530 et 4029235) (brevet EP 0695496 ou US 5414955 manuel à buses vibrantes).

Dans le cas particulier d'un semis sur support, le relâcher de la graine à partir des buses peut se faire au-dessus d'un support enduit de colle gluante (entièrement ou en pistes) pour que la graine y soit immédiatement fixée en tombant sur la surface sans y rebondir (brevet FR 77.37364 d'origine allemande, brevets allemands DE 279 745, DE 306 663, DE 474 764, DE 826 516, DE 2 124 536, DE 2 219 448 et DE 2 373 218, nombreux brevets américains dont US 4584790, US 4173844 d'origine allemande, US 4414776 etc.)

En comparaison avec la présente demande, il n'y a pas dans ces brevets d'application directe des buses porteuses de graines sur la surface du support avec glissement différentiel.

Plus proche du dispositif exposé ici, il existe aussi des semoirs rotatifs munis de trous aspirants sur leur surface (disque ou un cylindre) et les graines sont "collées" à l'orifice de ces trous plus petits qu'elles, puis relâchées au-dessus de l'emplacement voulu.

Quand on emploie des trous aspirants, ils sont placés sur des surfaces généralement lisses :
- soit sur des plaques basculantes entre la position séparation et semis des graines (par exemple brevet US 5255618 à plaque pouvant vibrer pour répartir les graines sur ladite plaque puis se renverser pour les relâcher au-dessus du support) ce dispositif vibrant n'est pas rotatif et n'applique pas directement les graines.
- soit sur un disque (par exemples brevets récents DE 2701982 de 1978 - FR 1410390 de 1965 - FR 2174341 de 1973 - FR 2249521 de 1975 -US 4029235 US 4469244 d'origine française de 1984, EP 0338883 de 1989 Ribouleau et extensions : EP 033331931, EP 0328858, EP 0329095, etc.). Ces disques à éjection latérale de graines ne peuvent pas les appliquer sur une surface.
- soit sur un cylindre de toutes largeurs sur lequel les graines sont provisoirement collées par aspiration à l'orifice de ces trous puis relâchées au-dessus de l'emplacement voulu soit directement soit par l'intermédiaire de tuyaux
(par exemple DE 1582 087, US 4296695, US 4379664, US 5003894 , FR 2647298, FR 2641441, FR 2662903 de 1991 et EP 0462033 Gassot, ou FR 2659827 Pourey) A noter le brevet DE 1582 087 qui emploie aussi un cylindre aspirant pour semer des graines au-dessus d'un support comme du papier, mais en les relâchant sans les appliquer directement.

Aucun de ces brevets ne semble employer des vibrations sur un cylindre, car en technologie agricole habituelle, les cylindres sont généralement conçus trop lourd et épais pour pouvoir vibrer, et tous relâchent les graines à une certaine hauteur au risque de les faire rebondir et rouler.

Par contre le brevet US 4306509 emploie un cylindre aspirant par tubes internes en faisceaux sous aspiration séquentielle, avec dépose directe des graines sur le sol par arrêt local d'aspiration avec cames, mais il n'y a pas de glissement différentiel par rapport au sol et pas de vibrations sur le cylindre.

En résumé, on observe deux inconvénients dans ces dispositifs aspirants ayant précédé la présente demande :
- Premier inconvénient très général, visible sur presque tous les semoirs connus, les graines relâchées à une certaine hauteur rebondissent sur le support ou le sol et roulent avec une imprécision évidente en résultats sauf quand elles sont lâchées sur de la colle.
- Deuxième inconvénient, quand elles ne sont pas bien rondes ou enrobées sphériques, plusieurs graines peuvent se fixer à chaque embouchure aspirante.

En amélioration de l'état de la technique connue, une dépose directe des graines sur le support définitif est donc préférable et des vibrations spéciales sont intéressantes pour bien séparer les graines une à une à l'embouchure de chaque trou, en employant un cylindre aspirant léger conçu pour pouvoir vibrer. Si des poquets de plusieurs graines aux mêmes endroits sont nécessaires, il est toujours possible de percer plusieurs trous côte à côte.
La description qui va suivre et qui ne présente aucun caractère limitatif doit être lue au regard des figures annexées, par lesquelles :
- La figure 1 représente l'ensemble du dispositif avec sa partie connue (cylindre aspirant (1) et réservoir de graines (5)) et ses particularités (surface de cylindre vibrante (2) et appui ferme avec glissement différentiel sur un tapis roulant souple (10)) A remarquer les différences de vitesse entre le tapis (notée V) et le cylindre (notée V ± x%)
- La figure 2 représente en vue de dessus le cylindre perforé sous aspiration axiale (7) et ses flasques (4) à joints périphériques souples (14), pneumatiques de préférence

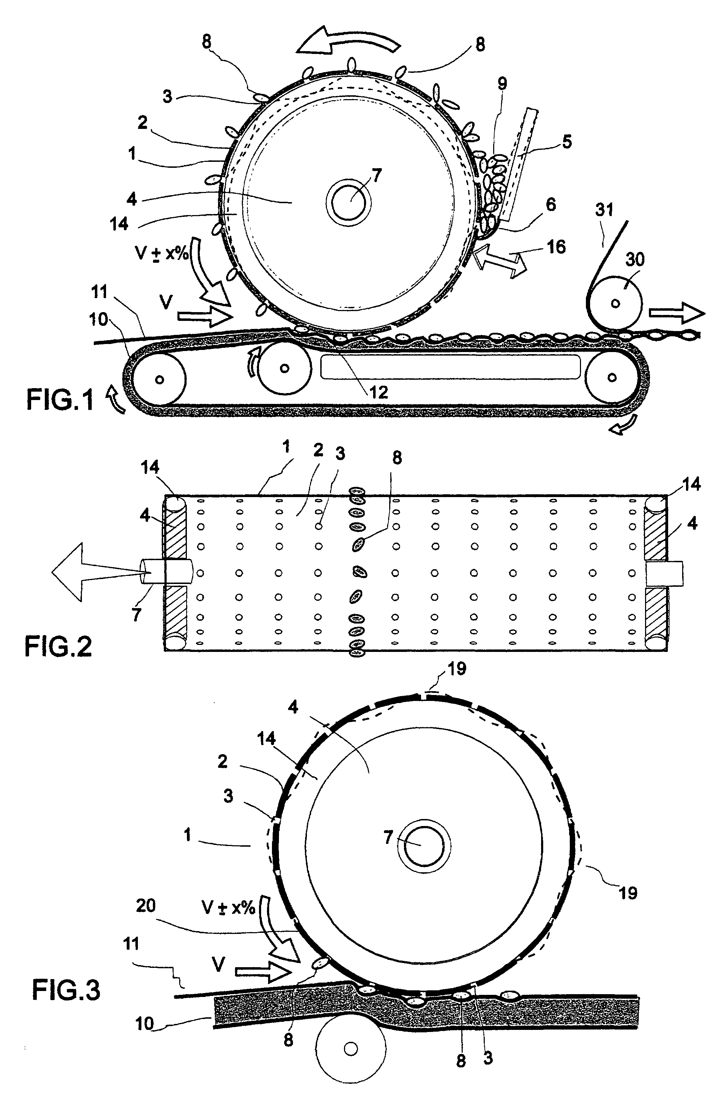

- La figure 3 représente en vue de côté le cylindre perforé et ses vibrations en vagues perpendiculaires à la surface (19), une de ses flasques (4) avec sa périphérie souple (14), ainsi que le tapis roulant épais (10) en matière très souple pressé contre le dessous du cylindre et dans lequel les gaines (8) peuvent s'enfoncer en se pressant contre un film de papier (11), par exemple. A remarquer l'amortissement des vibrations (20) vers le bas du cylindre à cause de l'appui sur le tapis souple. A remarquer aussi la différence de vitesses entre cylindre et tapis, faisant sortir les graines (8) de l'influence des trous aspirants (3).
- La figure 4 représente en vue de côté le cylindre perforé et son bac de réserves de graines mis en résonance de deux manières avec des vibrations "en cloche" concentriques ou "en vagues" progressives, en montrant l'amortissement des vibrations dans le bas du cylindre en contact avec le tapis.
- La figure 5 représente la surface du cylindre sans vibrations perpendiculaires, comme c'est le cas dans un dispositif classique, on y voit en coupe et en vue de dessus deux ou trois graines aspirées à la fois par les veines d'air (15) se collant définitivement sur un seul trou.
- La figure 6 représente la même surface mise en vibrations perpendiculaires et les mêmes deux graines flottant en lit fluidisé ou « fausse apesenteur » au-dessus. On y voit leurs réactions avec les veines d'air (15) aspirées par le trou (3) et l'évacuation de la graine excédentaire (8bis).
- La figure 7 représente l'induction électronique de vibrations pour faire résonner le cylindre grâce à une tige légère (18) s'appliquant dessus et mis en vibrations par un solénoïde électromagnétique (17). A noter la proximité du bac à graines (5) pouvant vibrer lui aussi.
- La figure 8 représente l'induction mécanique de vibrations pour faire résonner le cylindre grâce à des fléaux rotatifs (22) portés par un axe tournant rapidement (24).
- La figure 9 représente les graines creusant leurs "nids" (12) dans le papier (11) porté par le tapis roulant (10) en mousse cellulaire, par exemple. On voit le rabat vers l'horizontale par "brossage" des graines longues aspirées par leur pointe, ainsi que l'amortissement bénéfique des vibrations dans la partie descendante du cylindre. A noter un vibreur optionnel sur le bac à graines.

En général, la base du dispositif est donc un cylindre rotatif métallique (1), mis sous aspiration par son axe (7), dont la surface (2) possède des trous (3) plus petits que les graines (8) et régulièrement répartis à sa surface selon toute géométrie voulue.

Selon la méthode connue, une dépression se produit à l'orifice de chaque trou (3) en y collant provisoirement les graines (8) sans les abîmer.

Le cylindre rotatif (1) est horizontal et comporte contre sa face montante un réservoir de graines prismatique (5) constitué d'une barrette (6) (ou petit rouleau) s'appliquant souplement sur une génératrice du cylindre située sensiblement au milieu de la face montante dudit cylindre.

Ainsi les graines en vrac (9) peuvent être présentées contre la face montante du cylindre et se coller à l'orifice des trous aspirants (3).

Ces graines montent alors sur 1/4 de tour puis descendent sur 1/2 tour, c'est-à-dire font 3/4 de tour avant de se retrouver sous le cylindre en position de semis. Ce genre de dispositif est déjà connu et employé industriellement, du moins pour les graines rondes et régulières qui sont en général relâchées sous le cylindre par grattoir ou arrêt local de la dépression.

Par rapport à ce qui est connu, le présent dispositif a des caractéristiques physiques et mécaniques nouvelles telles que :
- d'une part, le cylindre rotatif (1) est en appui sur un tapis roulant souple (10) portant le support (11) et défilant sous lui à une vitesse tangentielle légèrement différente, de manière à déposer les graines (8) sur le support (11) par application directe en les y enfonçant, avec un lissage dû au glissement différentiel entre support et cylindre, chacun allant à une vitesse différente (la surface du dessous du cylindre allant avantageusement plus vite que le tapis roulant)
- et, d'autre part, ledit cylindre (1) peut vibrer facilement, en résonant comme une cloche sous l'effet de vibrations de type particulier de manière à bien séparer une à une les graines (8) aspirées à l'embouchure de chacun de ses trous (2). En effet, il a été constaté que chaque graine est sensible par résonance à une fréquence de vibration qui lui est propre à cause de sa masse, de sa densité, de sa forme et de la souplesse de son enveloppe.

La première caractéristique nouvelle de ce procédé de semis et dispositif de semoir réside dans la dépose des graines (8) sur le support définitif (11) (ici un film de papier, par exemple) en supposant qu'elles ont été préalablement bien séparées une à une sur le cylindre.

Comme vu plus haut, il faut éviter de relâcher ces graines au-dessus du support, même d'une petite hauteur, car elles y rebondissent et la bonne précision possible est perdue.

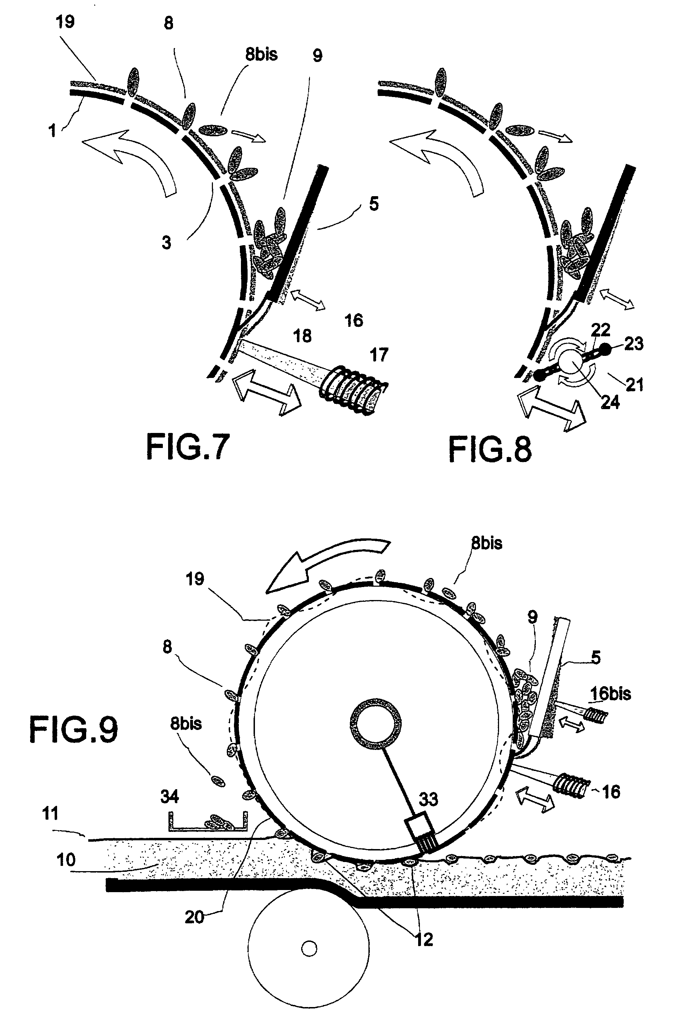

Pour obtenir un bon résultat, il faut que les graines soient appliquées directement sur le support (11). Si la vitesse du support était exactement égale à celle de la surface du cylindre (cylindre roulant sur le support) les graines collées par aspiration ne seraient pas déposées sur le support, elles resteraient collées par aspiration sur les trous (3) du cylindre et remonteraient avec sa rotation. Il faut donc éloigner les graines appliquées sur le tapis en dehors de la zone d'attraction aspirante de chaque trou (3), et c'est pourquoi il faut donner une vitesse tangentielle légèrement différente au cylindre par rapport au support (11) qui défile dessous. Une vitesse plus grande pour le cylindre est avantageuse car le lissage se fait alors en tendant le support papier (11) et en évitant les plis. A noter que cette différence de vitesse est aussi bénéfique pour éviter que les graines pointues aspirées par une de leurs extrémités et positionnées alors à la perpendiculaire de la surface du cylindre ne percent le support papier (11), cette différence de vitesses les rabattant alors à plat par effet de "brossage" (fig.3 ou 9).

Avantageusement, le support (11) est fibreux, souple ou fin, et il est porté par un tapis roulant (10) recouvert d'une matière très souple et molle, (ou un rouleau à enveloppe souple et molle), pour trois raisons :
- d'une part, pour que les graines appliquées directement sur le support (11) par le dessous du cylindre s'enfoncent sans être écrasées ou abîmées dans le support ou dans le tapis en creusant des nids (12) dans le support (11), ce dernier pouvant être fin comme du papier ou encore épais mais alors souple ou fibreux,
- d'autre part, pour allonger la surface de contact tangentielle entre le cylindre (1) et le tapis (10) par l'enfoncement du cylindre rigide dans la surface souple du tapis (10) ou du support (11),
- et enfin, pour amortir les vibrations (20) dans la partie basse du cylindre (1), ce qui évite les pertes de graines dues à l'action de la pesanteur qui autrement s'ajouterait à l'effet vibrant dans cette partie en risquant de faire tomber les graines hors de leur trou alors orienté vers le bas.

Cette dernière interaction utile "tapis souple / cylindre vibrant" justifie à elle seule l'obligation de grouper en un seul exposé l'ensemble du procédé et dispositif :

L'autre nouveauté réside dans l'induction de vibrations modulées à la surface de tout le cylindre et surtout dans le type de ces vibrations. Si le cylindre entier (1), sa surface (2) et le bac (5) réservoir de graines (9) sont mis en résonance vibratoire selon une fréquence adéquate, cette vibration désolidarise chaque graine des autres graines et surtout de la surface (2) qui les porte en particulier au niveau d'un trou (3). Ainsi, (fig.7) chaque graine peut "flotter" au-dessus de la surface (2), en "lit fluidisé", comme si elle était en état d'apesanteur. Il se produit des rebonds successifs très rapides sur la surface (telle une balle de tennis que l'on fait sautiller à quelques cm de haut en tenant la raquette horizontale). Cela rend les graines (8) très libres vis-à-vis de la surface porteuse (1) ou entre elles et parfaitement sensibles alors aux veines d'air (15) de l'aspiration locale près de chaque trou (veines d'air externe convergentes vers le trou (2)).

De plus, au niveau du bac de réserve (5), il est important, pour éviter le manque de graine à certains trous aspirants que ces graines en vrac (9) soient très libres les unes par rapport aux autres et donc non encastrées les unes dans les autres. C'est pourquoi ces vibrations spéciales doivent aussi agir au niveau du bac (5) pour que les graines y soient effectivement en "lit fluidisé". La proximité du dispositif vibrant ou l'addition d'un autre vibreur (16 bis) sur le bac (5) est donc nécessaire.

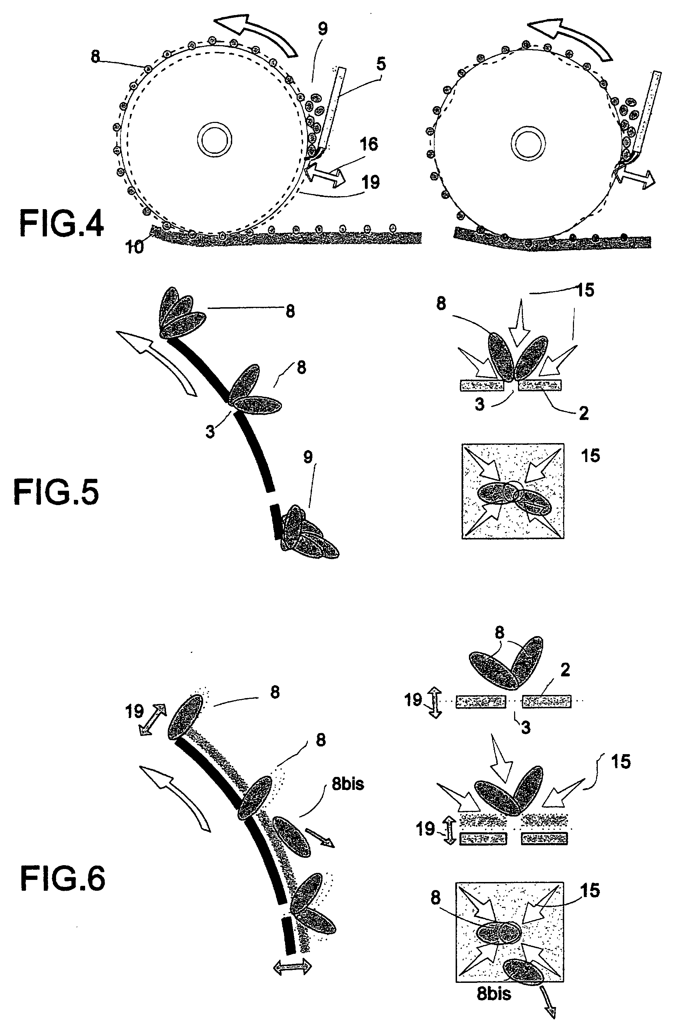

Si une graine (fig.5) est présentée seule près d'un trou (3) du cylindre, l'air (15) qui arrive concentriquement vers ce trou pousse la graine (8) à se centrer sur lui et à s'y coller (force inversement proportionnelle au carré de la distance au centre). Aucune autre graine ne peut alors l'en chasser car la force aspirante est maximale.

Si deux graines (fig.5 et 6) sont présentées ensemble à l'embouchure d'un trou aspirant (3), il reste obligatoirement un passage d'air entre elles ce qui réduit la force totale disponible. De plus chaque graine est maintenue par une force aspirante (veine d'air circulant autour (15)) statistiquement différente. Il est pratiquement impossible de tomber exactement à l'égalité. Dans ce cas, et sans vibrations (fig.5) les graines resteraient collées en doublons, mais si (fig.6) des vibrations adéquates les font "flotter" toutes les deux un peu au-dessus, c'est la graine (8) recevant la force aspirante la plus grande (généralement la plus proche du centre du trou) qui chasse la graine (8bis) la moins aspirée pour obtenir une fixation maximale.

Même en cas de graines irrégulières ne pouvant pas boucher parfaitement le trou, c'est-à-dire s'il reste des fuites d'aspiration, cette deuxième graine excédentaire (8bis) n'étant plus beaucoup maintenue et étant, de plus, propulsée aléatoirement par les vibrations sur ses parties anguleuses, dégage très vite du secteur d'influence aspirante (force décroissante inverse du carré de la distance au centre du trou).

Au bout de quelques secondes du parcours montant puis descendant des graines portées par le cylindre rotatif (sur 3/4 de tour), une seule graine (8) reste présente à l'embouchure de chaque trou (3), car la force aspirante est alors telle que les vibrations ne peuvent plus la chasser, moyennant des réglages nécessaires pour obtenir un équilibre entre la force d'aspiration et la force de vibration, l'autre graine (8bis) tombant alors dans le réservoir (5) ou dans un bac récupérateur (34) (fig.9).

Le dispositif préférentiel pour déposer des graines sur une feuille de fin papier est constitué par un cylindre métallique creux (1) de largeur convenable, placé en position horizontale et mis sous aspiration d'air réglable par un conduit axial (7).

Il est constitué par exemple d'un tube en tôle roulée de faible épaisseur, compatible avec une résistance minimum à l'implosion sous l'effet de la dépression, (par exemple, de l'ordre du demi-millimètre pour une largeur de 1,20 m et un diamètre de 30 cm, soit entre 2/10 mm et 2 mm, par exemple, selon largeur). La surface de ce cylindre possède des trous (2) de diamètre convenable d'environ 1/10 à 1/4 du diamètre des graines (par exemple entre 0,2 mm et 1 mm), disposés selon toute géométrie de semis voulue, en tenant compte de la distorsion de géométrie due au lissage au moment se la dépose (facteur de déformation égal au pourcentage de différence de vitesses).

Ce cylindre en tôle mince est mis en place en l'enfilant entre deux flasques circulaires (4) de diamètre un peu plus faible que le diamètre intérieur du cylindre. La liaison entre le cylindre de tôle et les flasques est assurée par des joints annulaires (14), étanches et élastiques, (de préférence pneumatiques gonflables, par exemple), de manière à favoriser une résonance bien répartie sur toute la surface du cylindre, tout en préservant l'étanchéité.

La surface (2) de ce cylindre aspirant est excitée par un dispositif générant des vibrations spéciales (16) de manière à faire résonner librement ladite surface comme une cloche, c'est-à-dire avec des vibrations en vagues perpendiculaires à chaque partie élémentaire de la surface du cylindre.

Ces vibrations possèdent de préférence un spectre non sinusoïdal (à front d'attaque très vertical) et de fréquence suffisamment haute (entre 10 et 100 Hz). Les plus favorables pour la bonne séparation sont dépendantes de la nature des graines (grosseur, densité, forme, état de surface, souplesse, etc.) et elles sont donc réglables en forme d'onde et d'harmoniques pour choisir le meilleur résultat expérimental possible.

Le dispositif pour faire entrer en résonance le cylindre est constitué (fig. 8 et 9) :
- soit de vibreurs (16) similaires à des solénoïdes (17) de haut-parleurs ou de sonnerie et mis en contact avec la surface du cylindre par des tiges légères (18), cette solution permettant de régler la fréquence, puis de moduler précisément la forme de la courbe de vibration et de ses harmoniques grâce à des amplificateurs de type électronique sonore branchés éventuellement sur un oscilloscope pour mieux contrôler la forme des ondes et les harmoniques.
- soit plus simplement de fléaux rotatifs (21) constitués par exemple de chaînettes (22) portant à leur extrémité libre une boule en matériau plastique dur (23) frappant rapidement la surface à la manière d'un battant de gong. L'axe qui les porte (24) est parallèle et proche d'une génératrice du cylindre aspirant. Cet axe tourne à une vitesse d'environ 3 000 t/mn en fléau simple ou 1 500 t/mn en fléau double, de manière à obtenir une fréquence de chocs réglable d'environ 50 Hz en moyenne,
- soit de tout vibreur classique de fréquence correspondante à celle voulue pour le type de graine à semer.

Le dispositif permettant l'application des graines précédemment séparées sur le cylindre vibrant est constitué en version préférentielle d'un tapis roulant (10) portant le support (10), fin papier en général, et passant sous le cylindre rotatif aspirant (1) portant les graines (8), ce cylindre étant fermement appliqué sur le tapis (10) donc sur le papier (11) porté par lui.

Ce tapis roulant (10) est recouvert d'une matière très souple (et même suffisamment molle pour amortir les vibrations) sur plusieurs millimètres d'épaisseur, comme de la mousse de caoutchouc cellulaire, par exemple. Plus précisément l'épaisseur de matière souple doit être au moins égale à deux fois le diamètre de la plus grosse graine à semer pour éviter son écrasement.

Grâce à des pignons, à des chaînes ou à des galets servant à faire une liaison mécanique ayant un rapport de transmission adéquat, le cylindre (1) tourne plus vite que le tapis (10), de manière à ce que les trous aspirants (3) s'éloignent des graines (8) qui se trouvent à ce moment "enfoncées" dans leurs "nids" (12) creusés dans le fin support (11) par la pression d'application. Avantageusement, la vitesse tangentielle du cylindre est choisie plus importante de 10 à 30 % par rapport à celle du tapis portant le papier, ce qui a aussi comme effet de bien tendre le papier sans plis.

Plus généralement, il faut noter que comme le cylindre est lisse, toutes les différences de vitesses sont possibles, en plus ou en moins, et peuvent être réglables par variateur continu, avec comme seul impératif que les graines déposées ne se retrouvent pas ré-aspirées par un des trous suivants du cylindre, au niveau de la séparation montante entre le cylindre et le papier.

Une ou plusieurs brosses fixes (33) ou rotatives peuvent être placées à l'intérieur du cylindre (démontable en tôle tubulaire) pour frotter contre sa paroi interne basse montante et ainsi nettoyer les quelques trous qui pourraient être bouchés par des morceaux de graines ou des poussières. D'autres brosses peuvent être ajoutées à l'extérieur au même endroit.

En résultat, les graines sont alors ancrées précisément sur le support dans leurs "nids" et sont prêtes à être recouvertes d'un autre film de papier (31), par exemple, pour les emprisonner définitivement.

En extension, le semis en pleine terre effectué avec un tracteur remorquant ce dispositif est possible avec pratiquement la même précision.

Cependant, selon le présent procédé avec glissement différentiel, l'application directe sur la terre sous le cylindre est peu envisageable à cause de l'encrassement des trous aspirants par les particules de terre, de boue, de sable ou de poussière, il faut dont prévoir un transfert relais allant jusqu'à terre et interdisant le retour de particules vers le cylindre. Ce dispositif dérivé constitue l'objet d'une autre demande de brevet de perfectionnement.
L'ensemble du procédé et du dispositif est destiné plus particulièrement à placer précisément des graines sur un support cellulosique dégradable comme du papier fin par exemple, mais peut aussi s'appliquer avec de minimes modifications aux semis sur tous supports mous ou fibreux et même au semis direct en pleine terre.

## Revendications

1. Procédé de semis de haute précision possédant des moyens de prendre n'importe quelle forme ou taille de graine, des moyens de les séparer une à une et des moyens les déposer précisément sans rebond possible sur un support (film de papier, substrat ou sol par exemple), en employant un perfectionnement de la technique de séparation des graines par aspiration à l'embouchure de trous ménagés à des endroits précis sur la surface d'un semoir cylindrique rotatif qui dépose ensuite les graines sur le support, **caractérisé par le fait que** les graines (8) sont déposées selon la même géométrie précise par application directe en appui ferme sur un support souple (11), avec enfoncement dans ledit support et "lissage", c'est-à-dire avec un glissement dû à une différence de vitesses de défilement entre le dessous du semoir cylindrique (1) et ledit support souple (11), cette dépose ayant lieu après que les graines aient été d'abord séparées une à une sur le semoir cylindrique par des vibrations spéciales (19), dites « en cloche », vibrations avantageusement rendues moins importantes (20) et amorties sur la moitié basse dudit cylindre par la réaction du support souple en appui.

2. Dispositif de semoir pour la mise en oeuvre du procédé selon la revendication 1, constitué d'un cylindre métallique creux rotatif (1), mis sous aspiration réglable par un conduit axial (7), dont la surface lisse (2) possède des trous (3) de petit diamètre disposés selon toute géométrie de semis voulue, trous capables de fixer temporairement à leur embouchure une seule graine (8) pendant ¾ de tour du cylindre rotatif, ledit cylindre rotatif (1) étant en appui ferme sur un tapis roulant (10) (ou rouleau) qui défile sous lui en transportant un support (11), pouvant être épais ou fin comme du papier par exemple, **caractérisé par le fait que** le cylindre semoir (1) a en même temps sa surface libre mise en vibration par des vibrations spéciales (19) dites « en cloche», et tourne à une vitesse tangentielle différente par rapport au tapis roulant, de préférence légèrement plus rapidement, de manière à obtenir un glissement différentiel entre cylindre et tapis avec lissage, ce qui, après application, éloigne les graines (8) deposées sur le support (11) plus lent, de la zone d'influence des trous aspirants (3) du cylindre (1) plus rapide.

3. Dispositif de semoir selon la revendication 2, **caractérisé par le fait que** le tapis roulant (10) en appui ferme sous le cylindre est en matière souple et molle sur une épaisseur au moins égale à deux fois le diamètre de la plus grosse graine à semer, et que le support (11) est aussi souple, fibreux ou fin, de telle manière que, d'une part les graines s'enfoncent dans le support (11) sans être abîmées en y creusant des nids (12), que d'autre part, la surface de contact entre le bas du cylindre (1) et le support (11) soit allongée, et enfin, que les vibrations (20) soient amorties dans la partie basse du cylindre.

4. Dispositif de semoir selon les revendications 2 et 3, **caractérisé par le fait que** le cylindre (1) est constitué d'un tube en métal de faible épaisseur pouvant vibrer facilement tout en supportant la dépression, comme de l'acier d'épaisseur entre 2/10 et 20/10 de mm, par exemple.

5. Dispositif de semoir selon les revendications 2 à 4, **caractérisé par le fait que** le cylindre métallique tubulaire (1) est suspendu sur des joints annulaires (14), étanches, souples et élastiques au niveau de ses flasques latéraux (4), comme des joints pneumatiques gonflables par exemple, pour le rendre encore plus libre de vibrer et pour bien répartir la résonance vibratoire (19) sur toute la surface (2), en particulier celle de la moitié haute du cylindre.

6. Dispositif de semoir selon les revendications 2 à 5, **caractérisé par le fait que** les vibrations (19) du cylindre (1) sont perpendiculaires à chaque point de sa surface (2), comme celles d'une cloche, de manière à ce que sous l'effet de ces petits chocs répétés les graines (8) flottent en état de lit fluidisé ou de « fausse apesenteur » un peu au-dessus de ladite surface et soient libres de se coller une à une à l'embouchure de chaque trou aspirant (3), le tapis souple (10) amortissant et diminuant les vibrations (20) dans la partie basse du cylindre pour éviter les pertes de graines dues à la pesanteur.

7. Dispositif de semoir selon les revendications 2 à 6, **caractérisé par le fait que** la paroi du réservoir de graines (5) est aussi mise en vibrations, soit par le même mécanisme (16) proche qui fait vibrer le cylindre, soit par d'autres vibreurs spécifiques (16bis), de manière à ce que les graines contenues en vrac (9) dans le réservoir (5) soient très libres les unes par rapport aux autres.

8. Dispositif de semoir selon l'une quelconque des revendications précédentes, **caractérisé par le fait que** le mécanisme (16) qui met en vibrations le cylindre (1) et la réserve de graines (5) est constitué de un ou plusieurs vibreurs similaires à des solénoïdes de haut-parleurs ou de sonnerie (17), mis en contact avec la surface du cylindre par des tiges légères (18) et induisant des vibrations perpendiculaires à la surface (2) de fréquence entre 10 et 100 Hz.

9. Dispositif de semoir selon la revendication 8 **caractérisé par le fait que** un ou plusieurs amplificateurs de type électronique sonore, contrôlés éventuellement sur un oscilloscope, règlent les paramètres de chaque vibreur pour moduler précisément la forme de la courbe de vibrations (19) et de ses harmoniques selon la capacité de résonance du cylindre (1) et la sensibilité de chaque type de graine (8) aux vibrations.

10. Dispositif de semoir selon l'une quelconque des revendications 2 à 7 **caractérisé par le fait que** le mécanisme simplifié (21) qui met en vibration le cylindre et le fait entrer en résonance est constitué de fléaux rotatifs en forme de chaînettes (22) portant à leur extrémité libre une boule en matériau plastique dur (23) frappant rapidement la surface (2) à la manière d'un battant de gong ou de cloche à une fréquence réglable comprise entre 10 et 100 Hz dépendante de la vitesse de rotation de l'axe qui porte les fléaux (24).

11. Dispositif de semoir selon l'une quelconque des revendications 2 à 10 **caractérisé par le fait que** des brosses internes (33) ou externes au cylindre (1), situées dans sa partie basse montante, frottent contre la paroi du cylindre, pour nettoyer les trous (3) éventuellement bouchés par des débris de graines ou des poussières.

## Patentansprüche

1. Hochgenauigkeitsaussaatenverfahrensweise, die Mittel irgendeine Form oder Größe von Samen zu nehmen, Mittel sie eins nach dem anderen zu trennen, und Mittel sie genau ohne möglichen Abprall auf einem Träger (Papierfilm, Substrat oder Boden zum Beispiel) abzulegen, indem man sich eine Vervollkommnung der Technik der Trennung der Samen durch Aspiration an der Mündung von Löchern gebraucht, die an präzisen Stellen auf der Oberfläche einer zylindrischen Rotationssämaschine geschont wurden, die danach die Samen auf dem Träger ablegt, charakterisierte durch die Tatsache, daß die Samen (8) nach derselben genauen Geometrie abgelegt werden, durch direkte Anwendung in fester Unterstützung auf einem flexiblen Träger (11), mit Vertiefung in besagtem Träger und "Glätten", das heißt es mit einem Rutschen, das im einem Unterschied zu Ablaufgeschwindigkeiten zwischen der Unterseite der zylindrischen Sämaschine (1) und besagtem flexiblem Träger (11) zurückzuführen ist, diesem Abmontieren stattfindend nach, daß die Samen zuerst auf der zylindrischen Sämaschine durch spezielle Vibrationen eins nach dem anderen getrennt waren (19), die "in Glocke" Vibrationen gesagt wurden, die vorteilhaft weniger wichtig (20) und amortisiert auf die niedrigen Hälfte des Zylinders gemacht wurden, durch die Reaktion des flexiblen Trägers in Unterstützung.

2. Sämaschinenvorrichtung für die Umsetzung der Verfahrensweise nach Forderung 1, bestehend von einem metallischen Hohlrotationszylinder (1), die unter regulierbarer Aspiration durch eine Achsenleitung (7) gestellt wurde, deren glatte Oberfläche (2) Löcher (3) kleinen Durchmessers besitzt, die nach jeder gewollten Aussaatgeometrie verfügt wurden, Löcher, die fähig sind, zeitweilig auf ihre Mündung nur einen Samen (8) während des ¾ der Umdrehung des Rotationszylinders festzulegen; besagter Rotationszylinder (1), der in fester Unterstützung auf einem rollenden Teppich (10) (oder Rolle) ist, der unter ihm defiliert, einen Träger (11) transportierend, der dick oder fein als Papier zum Beispiel sein kann, charakterisierte durch die Tatsache, daß die freie Oberfläche des Sämaschinenzylinders (1) in selben Zeit in Vibration durch spezielle Vibrationen (19) gesetzt wird, die "in Glocke" gesagt wurden, und mit einer anderen Tangentialgeschwindigkeit hinsichtlich des rollenden Teppichs dreht, von Präferenz leicht schneller, damit ein Differentialrutschen zwischen Zylinder und Teppich mit Glätten zu erhalten, was nach Anwendung die abgelegten Samen (8) auf dem langsamer Träger (11) entfernt, von der Einflusszone den saugenden Löchern (3) des schnelleren Zylinders (1).

3. Sämaschinenvorrichtung nach Forderung 2, charakterisierte durch die Tatsache, daß der rollenden Teppich (10), der in feste Unterstützung unter dem Zylinder ist, im flexiblen und milden Bereich auf einer Dicke ist, die wenigstens zweimal der Durchmesser des größten zu säenden Samens ist, und daß der Träger (11) auch biegsam, faserig oder fein ist, damit einerseits die Samen sich im Träger (11) ohne beschädigt zu werden einschlagen, indem sie dort Nester graben (12), andererseits die Berührungsfläche zwischen dem Boden des Zylinders (1) und der Träger (11) verlängerte ist, und schließlich, daß die Vibrationen (20) im niedrigen Teil des Zylinders amortisiert werden.

4. Sämaschinenvorrichtung nach Forderung 2 und 3, charakterisierte durch die Tatsache, daß der Zylinder (1) aus einer Röhre aus Metall schwacher Dicke besteht, der leicht vibrieren kann, indem man die Depression trägt, wie Dickestahl zwischen 2/10 und 20/10 mm, zum Beispiel.

5. Sämaschinenvorrichtung nach Forderung 2 bis 4, charakterisierte durch die Tatsache, daß der röhrenförmige metallische Zylinder (1) auf ringförmigen Fugen (14) aufgehangen wird, die wasserdichte, biegsame und elastische bei seinen Lagerschildern Seiten (4) sind, wie aufblasbare pneumatische Fugen zum Beispiel, um es noch freier zu vibrieren zu machen, und um die vibrierende Resonanz (19) auf der ganzen Oberfläche (2) gut zu verteilen, besonders jenes der hohen Hälfte des Zylinders.

6. Sämaschinenvorrichtung nach Forderung 2 bis 5, charakterisierte durch die Tatsache, daß die Vibrationen (19) des Zylinders (1) auf jedem Punkt seiner Oberfläche (2) senkrecht sind, wie jene einer Glocke, damit unter der Wirkung dieser kleinen wiederholten Schocks, die Samen (8) in Stand von Wirbelbett oder von "falsch Schwerelosigkeit" wenig über besagter Oberfläche schwimmen, und eins nach dem anderen auf der Mündung jedes strebenden Lochcs (3) sich zu kleben frei sind, der flexible Teppich (10) die Vibrationen (20) im niedrigen Teil des Zylinders amortisierend und vermindernd, um die Samenverluste zu vermeiden, die auf die Schwerkraft zurückzuführen sind.

7. Sämaschinenvorrichtung nach Forderung 2 bis 6, charakterisierte durch die Tatsache, daß die Wand des Behälters Samen (5) auch in Vibrationen gestellt wird, entweder durch denselben nähen Mechanismus (16), der den Zylinder vibrieren läßt, oder durch anderen spezifischen Vibrieren (16bis), damit die Samen, die in Massengut (9) im Behälter (5) enthalten sind, sehr frei hinsichtlich einander sind.

8. Sämaschinenvorrichtung nach irgendeiner den vorhergehenden Forderungen, charakterisierte durch die Tatsache, daß der Mechanismus (16), der in Vibrationen den Zylinder (1) und die Samenreserve stellt (5), aus ein oder mehreren Gleichstromunterbrechern besteht, die Solenoiden von Lautsprechern oder von Klingeln (17) ähnlich sind, in Kontakt mit der Oberfläche des Zylinders durch leichte Stämme (18) gestellt, und Vibrationen leitend, die auf der Oberfläche (2) senkrecht sind, von Häufigkeit zwischen 10 und 100 Hz.

9. Sämaschinenvorrichtung nach Forderung 8, charakterisierte durch die Tatsache, daß ein oder mehrere Verstärker sonoren elektronischen Typs, auf einem Oszilloskop eventuell kontrollierte, die Parameter jedes Gleichstromunterbrechers regulieren, um die Form der Vibrationskurve (19) und ihrer Harmonischen nach der Resonanzkapazität des Zylinders (1) und der Empfindlichkeit jeder Samenart (8) bezüglich der Vibrationen genau anzupassen.

10. Sämaschinenvorrichtung nach irgendeiner von Forderungen 2 bis 7, charakterisierte durch die Tatsache, daß der vereinfachte Mechanismus (21), der in Vibration den Zylinder stellt, und diesen in Resonanz hineinzugehen läßt, aus kleinenkettenförmige Rotationsplagen (22) besteht, die an ihr freies Ende eine Kugel aus hartem Plastik Material (23) tragen, das die Oberfläche (2) schnell trifft, wie ein Flügel von Gong oder von Glocke, an einer regulierbaren Häufigkeit, gelegen zwischen 10 und 100 Hz, abhängig von der Drehzahl der Achse, die die Dreschflegel trägt (24).

11. Sämaschinenvorrichtung nach irgendeiner von Forderungen 2 bis 10, charakterisierte durch die Tatsache, daß Bürsten, interne (33) oder externe von dem Zylinder (1), die in seinem steigenden niedrigen Teil angesiedelt sind, gegen die Wand des Zylinders reiben, um die Löcher (3) zu reinigen, die eventuell durch Samenüberreste oder Staub verstopften sind.

## Claims

1. High precision sowing process with means of taking any shape or size of seed, means of separating them one by one, and means of precisely laying them without any possible bounce on a support (paper film, substrate or ground for example), by using an improvement of the seeds separation technique by aspiration at the mouth of holes set at precise places on the surface of a rotating cylindrical seeder, which then lays the seeds on the support,
**characterized by** the fact that the seeds (8) are laid according to the same precise geometry by direct firm pressing application on a flexible support (11), with pressing in the aforementioned support and "smoothing", i.e. with a slippage due to a difference in rolling speeds between the lower part of the cylindrical seeder (1) and the aforementioned flexible support (11), this laying taking place after the seeds have been initially separated one by one on the cylindrical seeder by special vibrations (19), called "bell-like", vibrations advantageously made less important (20) and damped out on the low half of the aforesaid cylinder by the reaction of the resting flexible support.

2. Seeder device for the implementation of the process according to claim 1, made of a rotation hollow metal cylinder (1), put under adjustable aspiration by an axial hose (7), whose smooth surface (2) has holes (3) of small diameter laid out according to any desired sowing geometry, holes able to temporarily fix at their mouth one single seed (8) during ¾ of turn of the rotating cylinder, the aforementioned rotating cylinder (1) being in firm resting on a travelling carpet (10) (or roller) which ravels under it carrying a support (11), which can be thick or thin like paper for example, **characterized by** the fact that the cylinder seeder (1) has at the same time its free side put in vibration by special vibrations (19), known as "bell-like", and rotates at a different tangential speed from that of the travelling carpet, preferably slightly faster, so as to obtain a differential slippage between the cylinder and the carpet with smoothing effect, which, after application, moves the laid seeds (8) on the slower support (11) away from the zone of influence of the aspiring holes (3) of the faster cylinder (1).

3. Seeder device according to claim 2, **characterized by** the fact that the travelling carpet (10) in firm resting under the cylinder is made of flexible and soft material on a thickness equal to at least twice the diameter of the largest seed to be sown, and that the support (11) is also flexible, fibrous or thin, in such a way that, firstly the seeds are inserted in the support (11) without being damaged by digging nests (12) there, secondly the surface of contact between the bottom of the cylinder (1) and the support (11) is stretched out, and finally that the vibrations (20) are damped out in the low part of the cylinder.

4. Seeder device according to claims 2 and 3, **characterized by** the fact that the cylinder (1) consists of a low thickness metal tube, which can vibrate easily while standing the depression, like steel with a thickness between 2/10 and 20/10 of mm, for example.

5. Seeder device according to claims 2 to 4, **characterized by** the fact that the tubular metal cylinder (1) is suspended on annular joints (14), air proof, flexible and elastic at the level of its side flasks (4), like inflatable pneumatic joints for example, to make it even more free to vibrate and for well distributing the vibratory resonance (19) on the overall surface (2), in particular that of the high half of the cylinder.

6. Seeder device according to claims 2 to 5, **characterized by** the fact that the vibrations (19) of the cylinder (1) are perpendicular at each point of its surface (2), like those of a bell, so that under the effect of these small repeated shocks, the seeds (8) float in a state of fluidified bed or "false weightlessness" slightly above the aforementioned surface, and are free to stick one by one at the mouth of each aspiring hole (3), the flexible carpet (10) damping out and decreasing the vibrations (20) in the low part of the cylinder, to avoid seeds losses due to gravity.

7. Seeder device according to claims 2 to 6, **characterized by** the fact that the side of the seed tank (5) is also put in vibrations, either by the same close mechanism (16) which makes the cylinder vibrate, or by other specific vibrators (16bis), so that the seeds contained in bulk (9) in the tank (5) are very free from each-other.

8. Seeder device according to any of the preceding claims, **characterized by** the fact that the mechanism (16), which puts in vibrations the cylinder (1) and it seeds reserve (5), consists of one or more vibrators similar to loudspeakers or doorbells solenoids (17), put in contact with the surface of the cylinder by light stems (18) and inducing vibrations perpendicular to the surface (2), of frequency between 10 and 100 Hz.

9. Seeder device according to claim 8 **characterized by** the fact that one or more amplifiers of audio-electronic type, possibly controlled on an oscilloscope, regulate the parameters of each vibrator to precisely modulate the shape of the vibrations curve (19) and its harmonics according to the resonance capacity of the cylinder (1) and the sensitivity of each type of seed (8) to the vibrations.

10. Seeder device according to any of claims 2 to 7, **characterized by** the fact that the simplified mechanism (21), which puts the cylinder in vibration and makes it enter in resonance, consists of rotating flails in the shape of small chains (22) bearing at their loose end a hard plastic material ball (23) quickly hitting surface (2), like a gong or bell bat, at an adjustable frequency ranging from 10 to 100 Hz depending on the rotation speed of the axis carrying the flails (24).

11. Seeder device according to any of claims 2 to 10, **characterized by** the fact that brushes, internal (33) or external to the cylinder (1), located in its rising low part, rub against the side of the cylinder, to clean holes (3) possibly jammed by seeds remains or dust.
